(19)

Europäisches Patentamt
European Patent Office
Office européen des brevets

(11) **EP 1 908 728 A1**

(12) **EUROPEAN PATENT APPLICATION**

(43) Date of publication:
**09.04.2008 Bulletin 2008/15**

(21) Application number: **06425681.1**

(22) Date of filing: **06.10.2006**

(51) Int Cl.:
*C01B 3/06* (2006.01)  *B01J 19/00* (2006.01)
*F04B 43/04* (2006.01)  *H01M 8/06* (2006.01)
*H01M 8/10* (2006.01)

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(71) Applicant: **STMicroelectronics S.r.l.**
**20041 Agrate Brianza (Milano) (IT)**

(72) Inventors:
 • **Giuffrida, Roberta**
 **I-95040 S.G.Galermo (Catania) (IT)**
 • **Salanitri, Marco Antonio**
 **I-95100 Catania (IT)**

 • **Spoto, Giuseppe Emanuele**
 **I-95039 Trecastagni (Catania) (IT)**
 • **Calamia, Stefania**
 **I-95027 San Gregorio (Catania) (IT)**
 • **Leonardi, Salvatore**
 **I-95025 Aci. S. Antonio (Catania) (IT)**
 • **Coffa, Salvatore**
 **I-95030 Tremestieri Etneo (Catania) (IT)**

(74) Representative: **Ferrari, Barbara et al**
 **Botti & Ferrari S.r.l.,**
 **Via Locatelli, 5**
 **20124 Milano (IT)**

(54) **Process and corresponding apparatus for continuously producing gaseous hydrogen to be supplied to micro fuel cells**

(57)  A process for the production of hydrogen for micro fuel cells is described, comprising the successive steps of:
- continuously supplying a catalytic bed (14) with an aqueous solution of Sodium Borohydride, the catalytic bed being made of at least one metal chosen among Cobalt, Nickel, Platinum, Ruthenium with obtainment of hydrogen and of a by-product comprising Sodium metaborate,
- continuously recovering the hydrogen thus obtained and
- supplying, with said hydrogen as it is as obtained, a micro fuel cell which provides its transformation into electric energy.

 An apparatus is also described for the actuation of the above described process.

FIG. 2

**Description**

Field of application

In its most general aspect, the present invention relates to the industrial field of micro fuel cells, supplied with hydrogen, for generating electric energy, particularly but not exclusively intended for the operation of portable electronic devices.

In particular, the present invention relates to a process and a corresponding apparatus for continuously producing gaseous hydrogen to be supplied to micro fuel cells of the above type.

Prior art

It is known that the growing demand for electric energy to supply portable electronic devices has determined an intense, strong interest of the experts of the field in the identification, design and realisation of new electric energy sources, in addition to and overcoming the by now traditional batteries used to date for the above scope, for example lithium ions batteries.

It is known that, among the new portable electric energy sources, great interest has been aroused by miniaturised fuel cells, hereafter indicated as micro cells, i.e. those devices capable of obtaining electric energy from a suitable fuel, for example through oxidation-reduction reactions.

In substance, micro cells are essentially energy converters which, by exploiting the energetic content of a chemical fuel, for example through an oxidation-reduction reaction, allow to produce electric energy in a reversible way, supplying collateral reaction products, in particular heat and water.

It is also known how, from some time, the researchers' attention to this industrial field is aimed at the identification of fuels which, suitably processed in respective micro cells, allow an easy, clean obtainment of electric energy, with high performances.

At present, hydrogen and methanol are the preferred fuels for the processing in micro cells of the considered type, in particular of the polymeric solid electrolyte type-[Proton Exchange Membrane Fuel Cells].

The density of the power generated by these micro fuel cells, main requisite in portable applications, is strongly influenced by the type of fuel used.

It has been proved that this density of energy obtainable from a micro fuel cell supplied with hydrogen is, under the same conditions, higher of some orders of magnitude than the one obtainable from a similar micro cell supplied with methanol. Hydrogen is thus *prima facie* the fuel to be used for micro fuel cells being requested a high power density, like in the case of portable applications.

But is has also been proved that for obtaining, from a micro hydrogen cell, amounts of electric energy sufficient for a satisfying, prolonged operation of a respective portable electronic device, in particular amounts of energy sufficient for justifying a gradual substitution, of the batteries currently used as portable energetic sources, it is necessary that said micro cell avails itself of a considerable hydrogen "resarve".

To the above scope and having taken into account the hydrogen production techniques used up to now, the very reduced dimensions of the portable electronic devices considered, such as those of the micro fuel cells associated with said devices, the above need can be satisfied by using small tanks (cylinders) wherein the hydrogen is stored at the gaseous state under very high pressures, or even liquefied at very low temperatures.

Known technical solutions for storing hydrogen provide to compress hydrogen in the gaseous phase under high pressure, for example equal to 200-350 bar at a temperature of 20°C. It is also known to store hydrogen in the liquid form at very low temperatures, for example equal to -253°C for a pressure of one bar.

The operative conditions (of temperature and pressure) for the storage of hydrogen in the liquid and gaseous form realised according to the prior art can be summarised in the following table:

| Storage system | Temperature (°C) | Pressure (bar) |
|---|---|---|
| liquid $H_2$ | -253 | 1 |
| compressed $H_2$ | 20 | 200 - 350 |

Besides the known high dangerousness of the different manipulations the hydrogen is to be subjected to for storing it in small tanks under the above conditions, other drawbacks of the known techniques are exactly due to the fact that these manipulations must be carried out between the hydrogen production step and the step of its transformation into electric energy, involving respective methodologies, apparatuses and devices of difficult management and control. Moreover, as regards the hydrogen liquefaction, it is known that it implies a total loss of energy equal to 30% since for maintaining the hydrogen in the liquid form it is necessary to preserve it at a temperature of -253°C. Moreover, for the conversion of the hydrogen into the liquid form, it is necessary to use cryogenic containers which, besides being expensive instruments, require a reduction of the leaks of fuel through evaporation to the minimum

For these reasons, the use of hydrogen as energetic vehicles in portable commercial systems has not found yet that great, advantageous diffusion that, in turn, its potentiality would make imagine.

The technical problem underlying the present invention is that of providing a process and a corresponding apparatus for the production of hydrogen to be used in micro fuel cells having such functional and structural features as to allow the overcoming of the drawbacks cited with reference to the prior art, reducing, in a substantial way, all the operative steps thereby provided between the hydrogen production and its transformation into electric energy.

Summary of the invention

This problem is solved according to the present-invention by a process for the production of hydrogen for micro fuel cells, characterised in that it comprises the successive steps of:

- continuously supplying a catalytic bed with an aqueous solution of Sodium Borohydride ($NaBH_4$), the catalytic bed being made by at least one metal of the group VIIIB of the periodic table of the elements, in particular a metal chosen among Cobalt, Nickel, Platinum, Ruthenium, with obtainment of hydrogen ($H_2$) and of a by-product comprising Sodium metaborate ($NaBO_2$).

- continuously recovering the hydrogen thus obtained and

- supplying a micro fuel cell with said hydrogen as obtained.

Advantageously, said catalyst if Ruthenium in the pulverulent form, finely dispersed in the respective catalytic bed. Further, preferably, the Ruthenium is deposited through PVD techniques (Phase Vapour Deposition) or through sputtering.

Preferably, said aqueous solution of Sodium Borohydride ($NaBH_4$) is buffered with a pH comprised between 13 and 14, and preferably with PH 14, through the addition of aqueous solution of Sodium hydroxide (NaOH) at 4% by weight.

The present invention also relates to an apparatus for the actuation of the above hydrogen production process, comprising a microreactor wherein a reaction chamber is defined, a catalytic bed in said reaction chamber, said catalytic bed being made of at least one metal chosen among Cobalt, Nickel, Platinum and Ruthenium, a first tank for the aqueous solution of $NaBH_4$, a second tank for the reaction by-products, characterised in that said reaction chamber comprises:

- at least one microchannel of predetermined length, in fluid communication, in correspondence with opposite ends thereof, with said first and respectively said second tank, and
- a semi-permeable membrane associated on said microchannel, for its whole length, to completely cover it.

Advantageously, said catalytic bed is made of powdered Ruthenium deposited on the bottom of said microchannel for at least part of the predetermined length thereof, in particular through PVD techniques (Phase Vapour Deposition) or through sputtering.

The features and advantages of a process and a corresponding apparatus for the production of hydrogen, according to the present invention, will be apparent from the following description made with reference to the annexed drawings, given by way of indicative and non limiting example.

Brief description of the drawings

In the drawings:

Figure 1 is a block scheme, which schematically shows a process for the production of hydrogen according to the present invention;

Figure 2 schematically shows, in a cross section, an apparatus according to the invention, for the actuation of the process of Figure 1;

Figure 3 shows an exploded, axonometric view of a microreactor composing the apparatus of Figure 2;

Figures 4 to 6, show an enlarged, axonometric view of a detail of Figure 3, in different steps of its realisation;

Figures 7 to 9 show an axonometric, exploded, enlarged view of a further detail of the apparatus of Figure 2;

Figure 10 shows a further enlarged view of a third detail of the apparatus of Figure 2;

Figure 11 shows a section, enlarged view of a fourth detail of the apparatus of Figure 2; and

Figures 12A-12D and 13A-13D show results of experimental tests carried out by the Applicant.

Detailed description

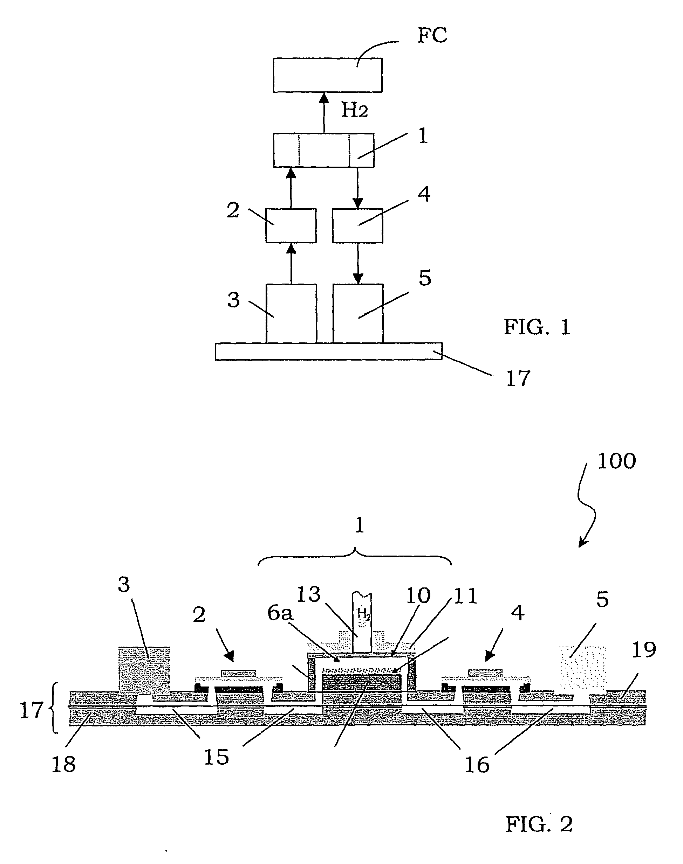

With reference to the block scheme of Figure 1, a process is described for the production of hydrogen according to the present invention, useful such as fuel in a micro cell FC (Micro Fuel Cell), intended for the production of electric energy for a generic portable electronic device, not shown.

A continuous flow of an aqueous solution of Sodium Borohydride ($NaBH_4$), stored at environmental temperature and pressure in a suitable tank 3, is supplied, by means of a micropump 2, to the reaction chamber of a microreactor 1.

Advantageously, for making this aqueous solution non inflammable and stable in the air, it is to be buffered with a pH comprised between 13 and 14, and preferably with PH 14 by means of an aqueous solution of Sodium hydroxide (NaOH), at 4% by weight.

In the reaction chamber of said microreactor 1, the above aqueous solution of Sodium Borohydride ($NaBH_4$) comes into contact, for an appropriate and predetermined residence time, with a catalytic bed formed by a metal chosen in the group comprising Co, Ni, Pt and Ru. Preferably, the catalyst used is Ruthenium in the pulverulent form, finely dispersed in the respective catalytic bed.

When it comes into contact with this catalyst, gaseous hydrogen is freed from the aqueous solution of Sodium Borohydride ($NaBH_4$) according to the reaction:

$$NaBH_4 + H_2O \rightarrow 4\,H_2 + NaBO_2$$

It is, in particular, an exothermic reaction, which occurs spontaneously at a temperature equal to 25°C.

While the solution of non reacted Sodium Borohydride ($NaBH_4$) and the by-product Sodium metaborate ($NaBO_2$), continuously discharged from the microreactor 1, are sent, by means of the same micropump 2, to a respective collection tank 5, the hydrogen ($H_2$) generated by the above catalytic reaction is sent as it is, at environment temperature and pressure, to the micro fuel cell FC, which takes care, in a per se known way, of its transformation into electric energy.

It is to be underlined that from the above indicated reaction, it occurs that from 1 mole of Sodium Borohydride ($NaBH_4$) 4 moles of hydrogen ($H_2$) are obtained, therefore, advantageously according to the invention, by using Sodium Borohydride ($NaBH_4$) as fuel solution good percentages of hydrogen are produced in a stable way.

In particular, from 1 litre of solution $NaBH_4$ at 30 wt%, stabilised with NaOH at 4wt%, having Ruthenium as catalyst 8, about 66gr. of liquid hydrogen are obtained, equivalent to 789 litres of gaseous hydrogen (equal to 7 wt% of hydrogen).

The presence of a further micropump 4 is to be noted, provided for emptying the reaction chamber of the microreactor 1, when desired, for example in the case of a desired stop of the supply of aqueous solution of Sodium Borohydride ($NaBH_4$) to said reaction chamber.

The advantages attained by the process of the present invention are absolutely evident. In particular:

-    Great availability of the starting material, made of an aqueous solution of Sodium Borohydride ($NaBH_4$), easy to be prepared and manipulated as well;

-    High performance of the catalytic reaction in the microreactor, whose completion does not imply any dangerousness and does not require particular and difficult controls or regulation interventions;

-    Production of hydrogen under environment temperature and pressure conditions and subsequent possibility of supplying it as it is produced to the micro fuel cell; continuity of the hydrogen production;

-    Control of the production by means of simple regulation of the capacity of the supply of Sodium Borohydride ($NaBH_4$) aqueous solution to the microrcactor and by means of time residence variations in contact with the catalyst and suitable variations of the amount of catalyst employed;

- Obtainment of a by-product, Sodium metaborate ($NaBO_2$) being non-toxic, easy to be manipulated, soluble in water and possibly usable for the obtainment of Sodium Borohydride ($NaBH_4$).

The invention also relates to an apparatus 100 for the actuation of the above described process and, more in particular, to the structure of the microreactor 1 cited in the block scheme of Figure 1.

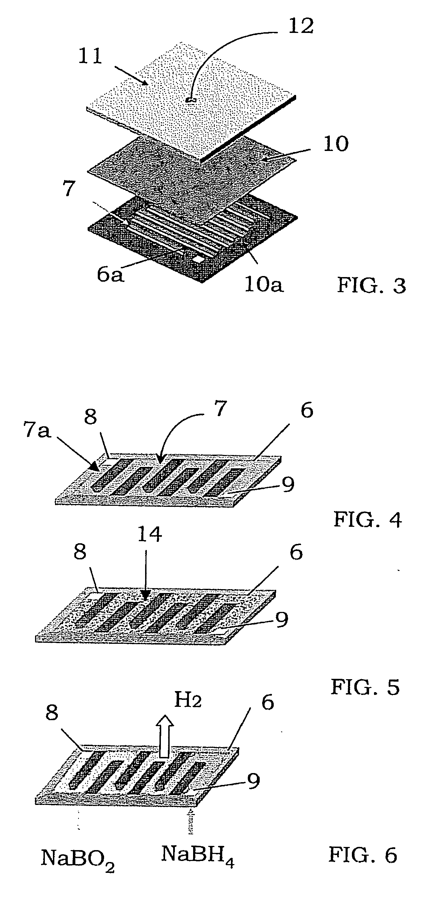

With reference to Figures 1 and 2, it is first to be noted that microreactor 1, micropumps 2 and 4, tanks 3 and 5, arc mounted on a support platform 17 which, advantageously as it will result hereafter in the description, is formed by two plates 18 and 19 of a resin known with the name of PYREX being juxtaposed and made integral with each other, for example by means of interposition of a suitable adhesive film.

With reference to Figures 2 and 3, the body of the microreactor 1 is essentially made of a plate 6, in particular a semiconductor material substrate of predetermined thickness, wherein a reaction chamber 6a is formed with known techniques hereafter specified.

In accordance with a preferred embodiment of the invention, this reaction chamber 6a is in turn constituted by a microchannel 7 made in the thickness of said plate body 6 and substantially serpentine-wise extended; two through holes 8 and 9 are open on the bottom 7a of said microchannel 7, in correspondence with respective opposite ends thereof. A semi-permeable membrane 10 (permeable to gases and impermeable to liquids) is fixed, with per se known techniques, onto said plate body 6, in juxtaposition to the wall thereof whereon said microchannel 7 is open. In particular, the membrane 10 is made integral with the plate body 6 thanks to the use of a layer 10a of adhesive formed, for example, by silicone resins.

A flat cover 11, realised with appropriate material, preferably a resin commercially known with the name PYREX, is in turn juxtaposed to said membrane 10, blocking it substantially as a sandwich on the plate body 6 of the microreactor 1. Said flat cover 11 is centrally equipped with an opening 12 intended for being engaged by a conduit 13 provided for the leak from the reaction chamber 6a of the hydrogen and possible other gases produced therein, as it will be apparent hereafter in the description. Between the flat cover 11 and the membrane 10 an air-casing "collecting" the hydrogen produced is also defined.

Advantageously, this membrane 10 ensures the correct operation of the microreactor 1 in any position and orientation, not allowing an undesired leak of the fuel solution of Sodium Borohydride ($NaBH_4$).

A catalyst of suitable granulometry, preferably Ruthenium, is deposited on the bottom 7a of the entire serpentine-like microchannel 7 so as to form a catalytic bed 14 therein.

In a preferred embodiment of the invention, the catalyst is suitably deposited on the bottom of the microchannel 7 of the microreactor 1 by using sputtering or PVD techniques (Phase Vapour Deposition) by a target or precursor of solid Ruthenium, thus realising a deposited solid catalytic layer.

The serpentine-like microchannel 7 which, as said, constitutes the reaction chamber 6a of the microreactor 1 of the present invention, is in fluid communication with the tank 3 of the aqueous solution of Sodium Borohydride ($NaBH_4$) and with the tank 5 of the by-products of the reaction by means of respective microconduits 15 and 16 formed and extended in the thickness of the support platform 17. In said microconduit 15 the micropump 2 is active for the suction of the aqueous solution of Sodium Borohydride ($NaBH_4$) from the tank 3 and for the delivery of the same solution to the reaction chamber 6a. As already specified, this micropump 2 also takes care of sending tn the tank 5 the by-products of the reaction through the microconduit 16.

In the microconduit 16, the micropump 4 is active, the latter being mainly provided, as above specified, for emptying the reaction chamber 6a (or serpentine-like microchannel 7) from what is present therein on the occasion of a possible stop of the micropump 2.

In a preferred embodiment of the invention, the plate body 6 of the microreactor 1 is micro-worked with the MEMS technology (Micro-electro-mechanical system), the microchannel 7 being trenched by micro-machines by removing portions of the plate body 6 realised by means of a semiconductor substrate, as shown in Figure 4

In a preferred embodiment, this removal of portions is realised with a photolithographic process using photolithographic masks "in negative" with respect to the portions to bc removed, In particular, these photolithographic masks are realised so as to leave the portions to be removed uncovered, protecting the rest of the semiconductor substrate realising the plate body 6 from a successive anisotropic chemical etching step used for removing these portions. The anisotropic chemical etching step is for example realised in wet with potassium hydroxide (KOH).

Advantageously, as shown in Figure 5, the catalyst is deposited on the bottom of the serpentine microchannel 7 by using sputtering or PVD techniques (Phase Vapour Deposition) using a shadow mask for protecting areas of the microreactor 1 which must be crossed by the solution of Sodium Borohydride ($NaBH_4$) or fuel solution. In this way the catalyst, which represents the most expensive component of the microreactor 1, is deposited only on a portion of a bottom wall of the reaction chamber 6a realised by the microchannel 7.

As already highlighted, by introducing into the reaction chamber 6a, i.e. into the microchannel 7, the solution

of Sodium Borohydride (NaBH$_4$), as shown in Figure 6, hydrogen (H$_2$) and Sodium metaborate (NaBO$_2$) are produced, as schematically shown in Figure 6.

Advantageously according to the invention, as above explained, the production of hydrogen occurs just after the solution of Sodium Borohydride (NaBH$_4$) enters into contact with the catalyst in the reaction chamber 6a.

As already said, the support platform 17 is formed by two separated portions 18, 19 made integral with each other, for example by means of an adhesive film.

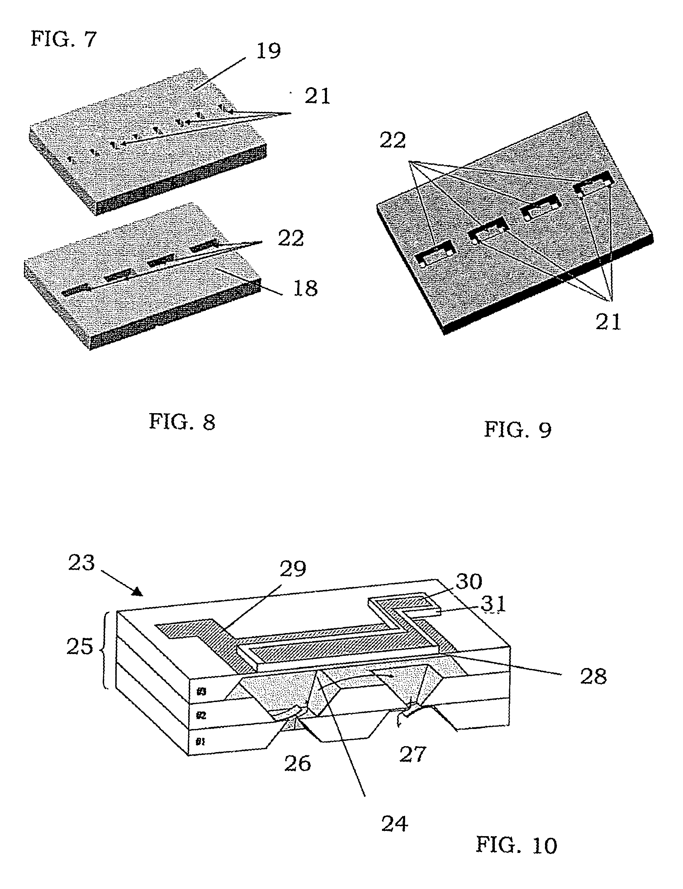

As shown in Figures 7 and 8, each of these two portions 18, 19 contains some grooves 21, 22 suitably dimensioned which, subsequently to the uninn of the two same portions 18, 19, realise the microconduits 15 and 16 and suitable inlets and outlets of the single components of the apparatus, in particular the tanks 3 and 5 and the micropumps 2 and 4.

In particular, as shown in Figure 9, the grooves 21 of the upper portion 19 of the support platform 17 realise these inlets and outlets, while the grooves 22 of the lower portion 18 of the support platform 17 realise the buried microconduits 15 and 16.

Advantageously according to the invention, each tank 3, 5 mounted on the support platform 17 is interchangeable like a cartridge. In particular, as soon as the fuel solution, in particular the solution of Sodium Borohydride (NaBH$_4$), is completely exhausted, the first tank 3 is substituted for the continuity of the hydrogen production by the proposed apparatus.

These tanks 3, 5 are, to this scope, equipped with mechanical valves, for example made of suspended diaphragms, and are automatically opened thanks to the pressure exerted for the installation of the same tanks 3, 5 on the support platform 17. The filling of the microchannels 15 and 16 - which realise a fluidic circuit inside the apparatus 100 according to the invention for the transportation of the solution of Sodium Borohydride (NaBH$_4$) - occurs by gravity up to the first micropump 2, subsequently the same will drive the solution inside the reaction chamber 6a.

The micropumps 2, 4 are thus control micropumps of the flow of Sodium Borohydride (NaBH$_4$) solution and they are rigidly fixed to the support platform 17, for example through the use of gluing resins, holes for the inlet and the outlet of these micropumps 2, 4 being aligned with the through holes 21 made in the upper portion 19 of the support platform 17.

In a preferred embodiment of the apparatus according to the invention, the micropumps 2, 4 are of the piezoelectric type and offer a high degree of miniaturisation. These piezoelectric micropumps vary the flow of fluid (liquid or gas) crossing them according to the vibration frequency of a piezoelectric element comprised therein.

An embodiment of a piezoelectric pump is shown in Figure 10.

In particular, the piezoelectric pump 23 comprises a flow channel 24 realised in a semiconductor substrate 25 connected to an input valve 26 and to an output valve 27.

An upper portion of the flow channel 24 is formed by an activation membrane 28.

On the activation membrane 28, outside the flow channel 24, a metallic lower electrode 29 and a metallic upper electrode 30 are formed in cascade, the latter being surrounded by a layer 31 of piezoelectric material.

By applying a voltage in frequency to the layer 31 of piezoelectric material this starts to vibrate, this vibration deforming the activation membrane 28 whereon it is realised, thus transferring the energy to the fluid flowing in the flow channel 24.

Further advantageously according to the invention, for obstructing the corrosive action exerted by the aqueous solution of Sodium Borohydride (NaBH$_4$) and Sodium hydroxide (NaOH) on the silicon substrate where the reaction chamber 6a is realised, the microchannel 7, in particular its bottom, is protected with an oxide layer 20, in particular silicon oxide (SiO$_2$).

In this way, the correct operation of the apparatus 100 according to the invention is also ensured for long periods of time.

In particular, this oxide layer 20 is deposited by means of a thermal process and, on it, the catalyst (Ruthenium) is then deposited with physical deposition techniques in vapour phase (PVD), as above indicated.

Through the experimental analyses it is in fact possible to verify that the solution of Sodium Borohydride (NaBH$_4$) and Sodium hydroxide (NaOH) is aggressive with respect to the silicon wafer wherein the reaction chamber 6a is realised since it is strongly alkaline.

In particular, the corrosion of the silicon substrate can irreversibly spark off if localised peeling off occur between the catalytic layer and the substrate. An imperfect deposition of the catalyst, the erosion due to the friction of the fluid with the microchannel 7 realising the reaction chamber 6a can produce areas, also of modest extension, wherein the substrate is directly in contact with the solution containing the hydrogen. From these areas or micro-fractures the erosion of the substrate starts in an uncontrollable way and brings, in a short time, to the progressive corrosion of the silicon and to the consequent peeling off of the catalytic bed.

The phenomenon is thus self-supplied and irreversible. If, instead, in correspondence with the potentially dangerous micro-fractures, the solution meets a protective layer formed by silicon oxide, the corrosion described does not occur and, therefore, the microreactor 1 can continue to be safely employed in time.

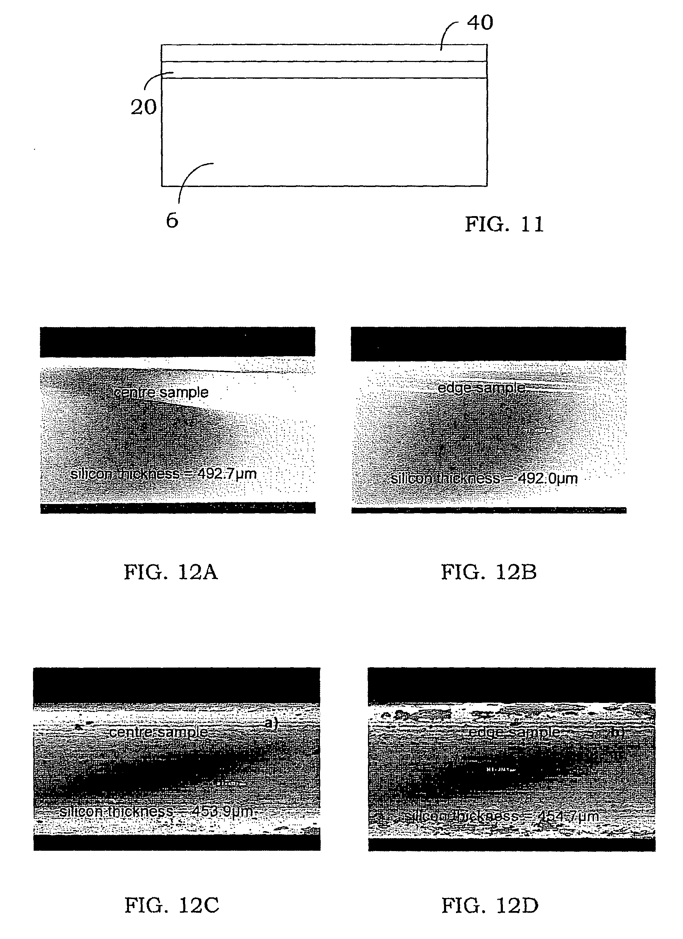

A portion of the microchannel 7 thus obtained is schematically shown in section in Figure 11, this section being drawn not to scale but so as to emphasise the important features of the invention. In particular, on the silicon substrate, which realises the body plate b of the microreactor 1, an oxide layer 20 is deposited, in particular silicon oxide, whereon a catalyst layer 40 is deposed.

To evaluate the corrosion speed of the silicon substrate by the solution of Sodium Borohydride ($NaBH_4$), a sample of non patterned silicon is immersed in this solution. The thickness of the silicon sample has been evaluated by means of SEM analysis prior to and after the contact with the solution.

The results of these experimental analyses are shown in Figures 12A-12D, reporting the SEM images relative to the silicon thicknesses in the centre (Fig. 12A) and to the edge of the sample (Fig. 12B) prior to the contact with the solution of Sodium Borohydride ($NaBH_4$) and to the same thicknesses in the centre (Fig. 12C) and to the edge of the sample (Fig. 12D) after a contact of 12 hours with the solution of Sodium Borohydride ($NaBH_4$). It occurs that the consume of silicon in thickness is $38 \mu m$ and the surface is corroded with an etching speed of 3.17 $\mu m/h$.

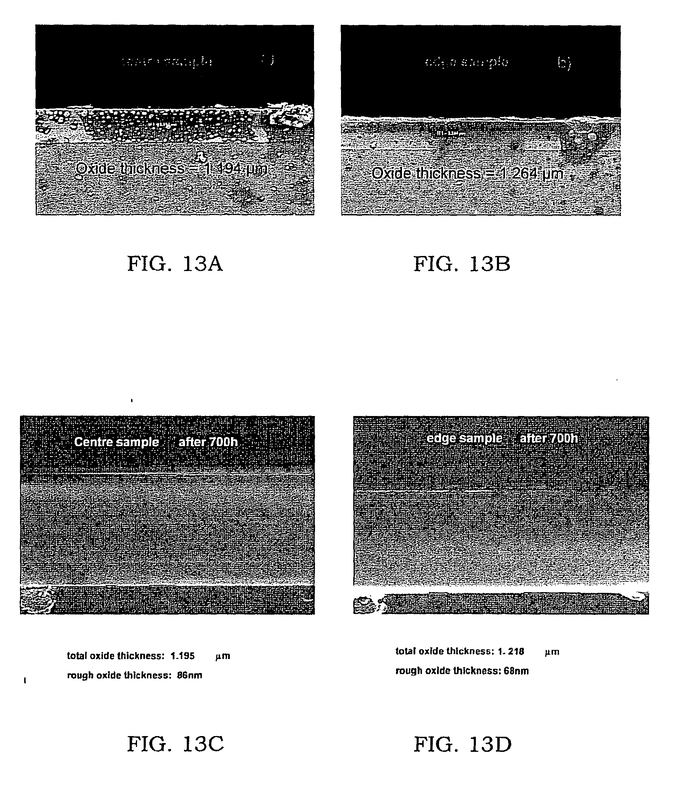

Further, Figures 13A-13D report the experimental results, always relatively to the thicknesses of silicon in the centre and at the edge of the sample prior to and after the immersion of the solution of Sodium Borohydride ($NaBH_4$) respectively, obtained by using a protective layer of silicon thermal oxide having thickness of 1.300 $\mu m$. It occurs that, after a contact of 700 hours with this solution, the oxide surface is rougher but no changes of thickness are evident, the mean thickness value of silicon oxide between sample centre and edge remaining substantially unchanged.

In conclusion, the apparatus 100 according to the invention carries out the continuous production of hydrogen through the reaction of a solution of Sodium Borohydride ($NaBH_4$), this hydrogen production advantageously occurring at environment temperature and pressure thanks to the use of a suitable catalyst.

Advantageously, the catalyst is serpentine-wise deposited on the bottom of a microchannel of a reaction chamber of the microreactor, in particular by using sputtering or PVD (Phase Vapour Deposition) techniques.

The apparatus for the production of hydrogen according to the invention comprises a microreactor and further micro components for the control and the modulation of the hydrogen production, resulting advantageously independent from the use orientation, thanks to the insertion of a semi-permeable membrane between the reaction chamber and the outlet conduit of the hydrogen in the microreactor.

All the components of the apparatus, except for the tanks, can be realised by using the micro-processing techniques developed for the manufacturing of integrated circuits, which allow to obtain a high dimensional control and very high processing accuracy, typical of photolithographic processes. Therefore, this apparatus can be manufactured on an industrial scale and at low costs.

In conclusion, the process and the corresponding apparatus proposed for the continuous production of gaseous hydrogen to be supplied to micro fuel cells solve the problems enlightened in relation with the prior art and further show the following advantages:

- the catalytic electrochemical reaction managing the hydrogen production can be controlled through the amount of catalyst used in the reaction chamber of the microreactor;

- the microreactor does not need energy for producing hydrogen, operates at environment temperature and atmospheric pressure and produces hydrogen only according to the demand;

- the microreactor and all its components can be miniaturised, allowing to realise a portable energy source;

- the catalytic reaction of an aqueous solution of Sodium Borohydride ($NaBH_4$) is a more economic method for producing hydrogen with respect to the methods used in the prior art and does not produce acid compounds or caustic vapours as it occurs in other production systems, for example by using solutions comprising Ca/water and Zn/acid;

- the hydrogen is the only gas produced therefore neither the consume nor the degradation of the so called "poisoning" of the catalyst occur, the catalyst being operated for example by reactions which produce carbon dioxide ($CO_2$) as in the case of methanol-supplied systems;

- if the apparatus is heated, the water vapours produced by the electrochemical reaction realised therein mix with the hydrogen produced, thing that is highly desirable for a micro fuel cell system since the water vapours, wetting the hydrogen flow, improve the membrane performances (thanks to a decrease of the inner resistance);

- the reaction speed is constant and thus allows to have hydrogen produced in a stable way for a period of time,

- the apparatus can bc used for the hydrogen supply as a product with micro fuel cells employed as energetic source in portable electronic devices.

**Claims**

1. Process for the production of hydrogen for micro fuel cells, **characterised in that** it comprises the successive steps of:

   - continuously supplying a catalytic bed (14) with an aqueous solution of Sodium Borohydride, the catalytic bed being made of at least one metal chosen among Cobalt, Nickel, Platinum, Ruthenium with obtainment of hydrogen and of a by-product comprising metaborate Sodium,
   - continuously recovering the hydrogen thus obtained and

   supplying, with said hydrogen as it is as obtained, a micro fuel cell which provides its transformation into electric energy.

2. Process according to claim 1, wherein said catalytic bed is formed by Ruthenium in the pulverulent form, finely dispersed.

3. Process according to claim 1, wherein said aqueous solution of Sodium Borohydride is buffered with a pH comprised between 13 and 14, preferably with pH 14, through an aqueous solution of Sodium hydroxide, at 4% by weight.

4. Process according to claim 1, **characterised in that** it further comprises a continuous discharge step of the solution of non reacted Sodium Borohydride and of the by-product comprising Sodium metaborate, by means of a micropump (2), by a microreactor (1) comprising, in a reaction chamber (6a) thereof, said catalytic bed (14) and sent, by means of said micropump (2), to a respective collection tank (5).

5. Process according to claim 4, **characterised in that** it further comprises an emptying step of said reaction chamber (6a) by means of a further micropump (4) connected to said microreactor (1).

6. Process according to claim 4, wherein said aqueous solution of Sodium Borohydride is stored at environment temperature and pressure in a suitable tank (3) and is supplied by means of said micropump (2) to said reaction chamber (6a).

7. Process according to claim 1, wherein said obtainment of hydrogen and of a by-product comprising metaborate Sodium occurs through contact of said aqueous solution-of Sodium Borohydride, for an appropriate and predetermined residence time, with said catalytic bed (14).

8. Apparatus for the continuous production of gaseous hydrogen to be supplied to a micro fuel cell of the type comprising a microreactor (1) wherein a reaction chamber (6a) is defined, a catalytic bed (14) in said reaction chamber (6a), said catalytic bed (14) being made of at least one metal chosen among Cobalt, Nickel, Platinum and Ruthenium, a first tank (3) for the storage of an aqueous solution of Sodium Borohydride, a second tank (5) for the storage of the reaction by-products comprising metaborate Sodium, **characterised in that** said reaction chamber (6a) comprises:

   - at least one microchannel (7) of predetermined length, in fluid communication, in correspondence with opposite ends thereof, with said first and respectively said second tank (3, 5), and
   - a semi-permeable membrane (10) associated on said microchannel (7), for its whole length, to completely cover it.

9. Apparatus according to claim 8, wherein said catalytic bed (14) is made of Ruthenium, deposited, preferably through PVD (Phase Vapour Deposition) techniques or through sputtering, on the bottom of said microchannel (7) for at least part of the predetermined length thereof.

10. Apparatus according to claim 9, wherein said microchannel (7) is substantially serpentine-like extended in a plate body (6) of predetermined thickness of said microreactor (1).

11. Apparatus according to claim 10, wherein said plate body (6) comprises a substrate of semiconductor material, suitable for being processed by means of micro-working techniques for the realisation of said microchannel (7).

**12.** Apparatus according to claim 8, wherein said microreactor (1) and said first and-respectively said second tank (3, 5) are mounted on a support platform (17).

**13.** Apparatus according to claim 12, wherein a first and a second microconduit (15, 16) are formed and extended in the thickness of said support platform (17) for putting said first and respectively said second tank (3, 5) in fluid communication with said reaction chamber (6a).

**14.** Apparatus according to claim 13, wherein a micropump (2) is active in said first microconduit (15) for the suction of the aqueous solution of Sodium Borohydride from said first tank (3) and for the delivery of the same solution to the reaction chamber (6a) and for the forwarding to said second tank (5) of the solution of non reacted Sodium Borohydride and of the reaction by-products comprising Sodium metaborate through said second microconduit (16).

**15.** Apparatus according to claim 13, wherein a further micropump (4) is active in said second microconduit (16) for emptying said reaction chamber (6a) of what is present therein.

**16.** Apparatus according to claim 13, wherein said support platform (17) is formed by two separated portions (18, 19) made integral with each other by means of an adhesive film, each of said two portions (18, 19) comprising grooves (21, 22) being suitably dimensioned so that, after the union of said two portions (18, 19), they realise said microconduits (15, 16) and suitable input and output openings of the single components of the apparatus mounted on said support platform (17).

**17.** Apparatus according to claim 8, wherein a flat cover (11) is juxtaposed to said membrane (10), blocking it like a sandwich on said plate body (6), said flat cover (11) being centrally equipped with an opening (12) intended for being engaged by a conduit (13) provided for the leak of the produced hydrogen from said reaction chamber (6a).

**18.** Apparatus according to claim 8, wherein said membrane (10) is made integral with said plate body (6) thanks to the use of an adhesive layer (10a).

**19.** Apparatus according to claim 8, wherein said first and respectively said second tank (3, 5) is interchangeable like a cartridge and are equipped with suitable mechanical valves which are automatically opened thanks to the pressure exerted in case of installation of said tanks (3, 5) on said support platform (17).

**20.** Apparatus according to claims 14 and 15, wherein said micropumps (2, 4) are flow control micropumps nf the piezoelectric type which vary the fluid flow crossing them according to a vibration frequency of a piezoelectric element comprised therein.

**21.** Apparatus according to claim 8, wherein said microchannel (7) is protected with an oxide layer (20) whereon a layer (40) of said catalyst is deposited.

FC

H2

1

2        4

3        5

FIG. 1

17

100

1

3

2        6a   13   10  11        4        5

H2

19

17 {

18        15                16

FIG. 2

FIG. 3

FIG. 4

FIG. 5

H2

NaBO₂    NaBH₄    FIG. 6

FIG. 7

FIG. 8

FIG. 9

FIG. 10

FIG. 11

FIG. 12A

FIG. 12B

FIG. 12C

FIG. 12D

FIG. 13A

FIG. 13B

total oxide thickness: 1.195  μm

rough oxide thickness: 86nm

FIG. 13C

total oxide thickness: 1. 218  μm

rough oxide thickness: 68nm

FIG. 13D

**European Patent Office**

## EUROPEAN SEARCH REPORT

Application Number

EP 06 42 5681

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2005/050763 A (UNIV ARIZONA [US]; GERVASIO DOMINIC [US]; ZENHAUSERN FREDERIC [US]) 2 June 2005 (2005-06-02) * the whole document * | 1-21 | INV. C01B3/06 B01J19/00 F04B43/04 H01M8/06 H01M8/10 |
| X | EP 1 354 851 A (HEWLETT PACKARD CO [US]) 22 October 2003 (2003-10-22) * the whole document * | 1-7 | |
| X | EP 1 496 014 A (DE FRANCESCO MASSIMO [IT]; POZIO ALFONSO [IT]) 12 January 2005 (2005-01-12) * the whole document * | 1-7 | |
| X | EP 1 396 471 A (HEWLETT PACKARD DEVELOPMENT CO [US]) 10 March 2004 (2004-03-10) * the whole document * | 1-7 | |
| X | WO 03/002247 A (PENN STATE RES FOUND [US]) 9 January 2003 (2003-01-09) * the whole document * | 8-21 | TECHNICAL FIELDS SEARCHED (IPC) |
| A | US 2003/103878 A1 (MORSE JEFFREY D [US] ET AL) 5 June 2003 (2003-06-05) * claims; figure 2A * | 8-12 | C01B B01J F04B H01M |

The present search report has been drawn up for all claims

| Place of search | Date of completion of the search | Examiner |
|---|---|---|
| The Hague | 23 March 2007 | Engelen, Karen |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 42 5681

This annex lists the patent family members relating to the patent documents cited in the above-mentioned European search report.
The members are as contained in the European Patent Office EDP file on
The European Patent Office is in no way liable for these particulars which are merely given for the purpose of information.

23-03-2007

| Patent document cited in search report | | | Publication date | Patent family member(s) | | | Publication date |
|---|---|---|---|---|---|---|---|
| WO 2005050763 | A | | 02-06-2005 | NONE | | | |
| EP 1354851 | A | | 22-10-2003 | CA | 2424350 | A1 | 16-10-2003 |
| | | | | JP | 2003327402 | A | 19-11-2003 |
| | | | | US | 2003194368 | A1 | 16-10-2003 |
| EP 1496014 | A | | 12-01-2005 | NONE | | | |
| EP 1396471 | A | | 10-03-2004 | CA | 2434977 | A1 | 06-03-2004 |
| | | | | JP | 2004099434 | A | 02-04-2004 |
| | | | | KR | 20040022199 | A | 11-03-2004 |
| | | | | US | 2004048115 | A1 | 11-03-2004 |
| WO 03002247 | A | | 09-01-2003 | NONE | | | |
| US 2003103878 | A1 | | 05-06-2003 | AU | 2002364144 | A1 | 23-04-2004 |
| | | | | CN | 1589174 | A | 02-03-2005 |
| | | | | KR | 20050083541 | A | 26-08-2005 |
| | | | | WO | 2004030805 | A1 | 15-04-2004 |
| | | | | US | 2006057039 | A1 | 16-03-2006 |

EPO FORM P0459

For more details about this annex : see Official Journal of the European Patent Office, No. 12/82